# EUROPÄISCHE PATENTSCHRIFT

(11) **EP 1 511 664 B1**
(45) Veröffentlichungstag und Bekanntmachung des Hinweises auf die Patenterteilung: **22.11.2006**
(21) Anmeldenummer: 03757029.8
(22) Anmeldetag: 05.06.2003
(51) Int. Cl.: B62D 3/12, F16N 7/14

(54) **ZAHNSTANGENLENKUNG**
RACK-AND-PINION STEERING
DIRECTION A CREMAILLERE

(30) Priorität: 11.06.2002 DE 10225718
(43) Veröffentlichungstag der Anmeldung: 09.03.2005
(73) Patentinhaber: ZF Lenksysteme GmbH, 73527 Schwäbisch Gmünd (DE)
(72) Erfinder: JOACHIM, Franz-Josef, 88131 Bodolz (DE); HAFERMALZ, Jens-Uwe, 73116 Wäschenbeuren (DE); SCHÄNZEL, Rainer, 73457 Essingen (DE); BENKLER, Karl, 82467 Garmisch-Partenkirchen (DE); SPECHT, Hartmut, 73553 Alfdorf (DE); OCKER, Hermann, 73529 Schwäbisch Gmünd (DE)
(86) Internationale Anmeldenummer: PCT/EP2003/005912
(87) Internationale Veröffentlichungsnummer: WO 2003/104064

(56) Entgegenhaltungen:
- EP-A- 1 167 158
- DE-A- 1 915 219
- DE-A- 19 937 254
- DE-U- 20 008 629

## Beschreibung

Die Erfindung betrifft eine Zahnstangenlenkung, insbesondere für ein Kraftfahrzeug, nach dem Oberbegriff des Anspruchs 1. bzw. 3.

Eine derartige Zahnstangenlenkung ist aus der Patentschrift DE-A-19937254 bekannt.

Zahnstangenlenkungen, die auch als Zahnstangenhydrolenkungen oder elektrische Servo- oder Hilfskraftlenkungen ausgebildet sein können, sind aus "Fahrwerktechnik: Lenkung," J. Reimpell, Vogel-Buchverlag, 1984, S. 70-90 bekannt.

Die Zahnstangenlenkung ist im wesentlichen aus einem zylinderförmigen Lenkgehäuse gebildet, in dem eine Zahnstange axial verschieblich angeordnet ist. Ein als Ritzel ausgebildetes Ende einer Lenksäule, ist mittig oder seitlich, etwa quer zur Längsachse des Lenkgehäuses in einer Bohrung in das Lenkgehäuse eingesetzt und über eine Ritzellagerung gelagert. Das Ritzel kämmt mit einer Verzahnung der Zahnstange. Die Zahnstange oder das Ritzel werden mit einem in einer Axialführung des Lenkgehäuses eingesetzten Druckstück in Anlage aneinander gehalten.
An den axialen Enden der Zahnstange sind Spurstangen gelenkig mit der Zahnstange verbunden und werden bei einer Drehung des Ritzels mit der Zahnstange verschoben.

Derartige Lenkgetriebe mit Schiebebewegung sind in bekannter Weise mit einer Lebensdauer-Schmierfettfüllung versehen. Ist die Zahnstangenlenkung als elektrische Servo- oder Hilfskraftlenkung ausgebildet, so wird das Ritzel über ein Getriebe eines Elektromotors angetrieben.
Treten im Betrieb hohe Lenkmomente und Lenkgeschwindigkeiten auf, so kann es zu erhöhtem Verschleiß, Fressen oder gar zu Grübchenbildung kommen. Das Lenkspiel vergrößert sich dadurch und es ergeben sich störende Betriebsgeräusche der Zahnstangenlenkung.

Der Erfindung liegt die Aufgabe zugrunde, eine Zahnstangenlenkung der gattungsgemäßen Art so weiterzubilden, dass der Verschleiß der Zahnstangenlenkung bei hoher Betriebsicherheit minimiert ist.

Die Aufgabe wird mit einer Zahnstangenlenkung mit den Merkmalen des Anspruchs 1 gelöst.

Um die Schmierung der Zahnstangenlenkung in dem gesamten Temperaturbereich (-40°C bis 130°C), in dem die Zahnstangenlenkung betrieben wird, zu verbessern, ist erfindungsgemäß vorgesehen, einen Schmierölspeicher der Zahnstangenlenkung zuzuordnen und aktiv oder passiv wirkende Mittel zur Förderung von Schmieröl aus dem Schmierölspeicher an den Verzahnungseingriff zwischen der Zahnstange und dem Ritzel vorzusehen.

Um bei einer Beschädigung, insbesondere von Faltenbälgen an dem Lenkgehäuse, die das Lenkgehäuse zu den Spurstangen hin abdichten, den Schmierölverlust zu minimieren, ist die Schmierölmenge gering gehalten und bevorzugt in einer Öltasche in dem Lenkgehäuse selbst untergebracht. Die Schmierung der Zahnstangenlenkung erfolgt somit als Umlaufschmierung, wobei die Mittel zur Förderung von Schmieröl mannigfaltig gestaltet sein können.

Es kann zur Minimierung von Kosten zweckmäßig sein, zur Schmierölförderung einen einfachen Körper aus einem Werkstoff mit Kapillarwirkung von dem Schmierölspeicher zu dem Verzahnungseingriff hin in dem Lenkgehäuse anzuordnen. Dazu eignet sich etwa ein Streifen oder Ring aus einem Filz, aus einem ölresistenten Weichschaum oder einem Gewebe. Die Rückführung des Schmieröls in den Schmierölspeicher kann dabei durch Schwerkrafteinwirkung im Lenkgehäuse, in Nuten oder Bohrungen in dem Lenkgehäuse erfolgen.

Die Mittel zur Förderung von Schmieröl können ausschließlich oder zusätzlich zu dem Körper aus einem Werkstoff mit Kapillarwirkung eine mechanische Ölpumpe umfassen. Die Ölpumpe kann im wesentlichen aus Bauteilen der Zahnstangenlenkung gebildet sein. Ein Druckstück einer Anpresseinrichtung zum Aneinanderpressen von Zahnstange und Ritzel dient dabei als Kolben der Ölpumpe. Das Druckstück wird im Betrieb der Zahnstangenlenkung intermittierend in der Bohrung in welcher es im Lenkgehäuse gleitend geführt ist, axial verschoben, sodaß ein Zwischenraum zwischen dem Druckstück und einem die Druckstückbohrung nach außen abschließenden Deckel als Förderraum zur Förderung von Schmieröl genutzt werden kann. Über Kanäle oder Bohrungen in dem Lenkgehäuse, welche vom Schmierölspeicher über den Förderraum zu Schmierölabgabepunkten der Zahnstangenlenkung führen , wird das Schmieröl mit Hilfe des Druckstück gefördert. Die Förderrichtung wird durch Rückschlagventile, bevorzugt durch Kugelrückschlagventile in den Kanälen festgelegt. Ein Rückfließen des Schmieröls in den Kanälen ist damit verhindert.

Das Ritzel der Zahnstangenlenkung kann auch mit einem Getriebe oder Untersetzungsgetriebe eines Elektromotors drehfest verbunden sein und das Getriebe kann auch in das Lenkgehäuse der Zahnstangenlenkung integriert sein. Es ist dann zweckmäßig, die Verzahnungen des Getriebes durch die Mittel zur Förderung von Schmieröl mit Schmieröl zu versorgen.
Zudem kann es zweckmäßig sein, die Lager der Zahnstangenlenkung und des Getriebes auf die genannte Weise mit Schmieröl zu versorgen. Auf diese Weise ist eine gleichbleibende Schmierung der Zahnstangenlenkung bei geringer in Umlauf befindlicher Schmierölmenge gewährleistet. Bei einem etwaigen Leckschlagen der Zahnstangenlenkung können nur geringe Mengen Öl in die Umgebung gelangen. Um einen solchermaßen möglichen Schmierölverlust nahezu gänzlich auszuschließen, ist es zweckmäßig, in dem Schmierölspeicher einen Körper aus einem Werkstoff mit Kapillarwirkung zur Speicherung des Schmieröls anzuordnen. Auf diese Weise ist die Menge an freiem Schmieröl in der Zahnstangenlenkung minimiert. Dabei kann der Körper zur Speicherung des Schmieröls aus einem anderen oder demselben Werkstoff wie der Körper zur Förderung von Schmieröl gebildet sein.

An den Schmierölabgabepunkten können, insbesondere zur gleichmäßigen, flächigen Verteilung von Schmieröl an den jeweiligen Verzahnungseingriff, Mittel zur Verteilung von Schmieröl, wie etwa filzartige oder pinselartige Stücke angeordnet sein. Es können auch ringförmige, filzartige Mittel zur Verteilung von Schmieröl dort angeordnet sein. Die Schmierölabgabe an den jeweiligen Wirkort kann durch zusätzliche Mittel, die etwa intermittierenden Druck auf die filzartigen, schwammartigen oder pinselartigen Körper ausüben, unterstützt werden.
Zur Rückführung von Schmieröl, welches an der Zahnstange anhaftet, durchgreift diese Ölabstreifringe. Zweckmäßig ist an den axialen Enden des Lenkgehäuses zur Rückführung von Schmieröl aus Faltenbälgen, die an den Enden des Lenkgehäuses die Spurstangen überdecken, jeweils eine Ölrückführbohrung in dem Lenkgehäuse angeordnet. Beim Stauchen der Faltenbälge wird dabei Schmieröl von den Innenräumen der Faltenbälge durch die Ölrückführbohrung zu dem Schmierölspeicher gefördert.

Ein Ausführungsbeispiel der Erfindung ist nachfolgend anhand der Zeichnung gezeigt. Die einzige Figur zeigt:

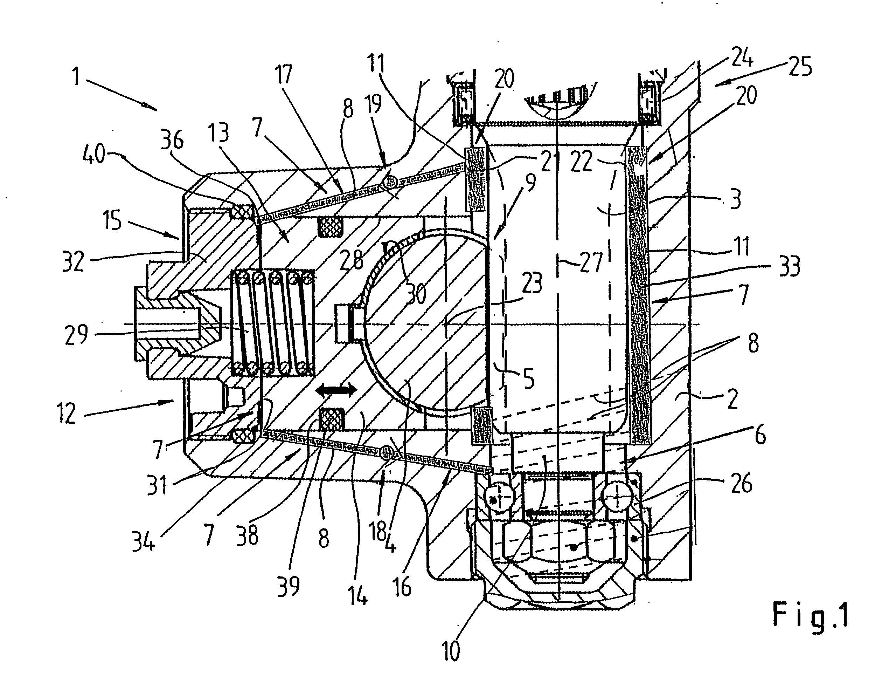

Fig. 1 einen Längsschnitt durch eine Zahnstangenlenkung entlang der Längsachsen des Ritzels und des Druckstücks.

In Fig. 1 ist in einem Längsschnitt ausschnittsweise eine Zahnstangenlenkung 1 im Bereich des Lenksäuleneinganges für ein Kraftfahrzeug gezeigt. Ein Lenkgehäuse 2 nimmt etwa quer zu seiner Längsachse 23 an seinem Lenksäuleneingang 25 ein Ritzel 3 in einem ersten Ritzellager 24 auf. Das Ritzel 3 ist mit einer Verzahnung 5 einer axial in dem Lenkgehäuse 2 verschieblich gelagerten Zahnstange 4 in Eingriff. Das Ritzel 3 ist axial und radial durch ein weiteres, dem ersten Ritzellager 24 mit Abstand an der Ritzelspitze angeordnetem, zweiten Ritzellager 26, in dem Lenkgehäuse 2 eingesetzt und gehalten.

Ein Druckstück 14 einer Anpressvorrichtung 15 ist entlang einer quer zur Längsachse 27 des Ritzels 3 und quer zur Längsachse 23 des Lenkgehäuses 2 angeordneten zylinderförmigen Bohrung 28 in dem Lenkgehäuse 2 axial verschieblich geführt. Das Druckstück 14 preßt unter Beaufschlagung einer Druckfeder 29 mit einer im Querschnitt halbkreisförmigen Gleitfläche 30 auf die Zahnstange 4 und hält deren Verzahnung 5 in Eingriff mit dem Ritzel 3. Die Druckfeder 29 stützt sich zwischen einem Druckstückboden 31 und einem, die Bohrung 28 nach außen abschließenden Deckel 32 ab.

Zur Schmierung der Zahnstangenlenkung 1 ist ein als Öltasche 10 im Bereich des zweiten Ritzellagers 26 ausgebildeter Schmierölspeicher 6 in dem Lenkgehäuse 2 vorgesehen. Die Schmierung des mechanischen Getriebes mit Schiebebewegung erfolgt dabei im Sinne einer Umlauf schmierung, wobei verschiedenartige Mittel 7 zur Förderung von Schmieröl 8 aus dem Schmierölspeicher 6 an den Verzahnungseingriff 9 zwischen der Zahnstange 4 und dem Ritzel 3 dargestellt sind.
Zu diesem Zweck kann auf einfache Weise ein Körper 11 aus einem Werkstoff mit Kapillarwirkung, wie etwa ein in dem Ausführungsbeispiel dargestellter länglicher, einige Millimeter dicker Filzstreifen 33 in die Öltasche 10 eintauchen und über die gesamte Zahnlänge des Ritzels 3 an dem Ritzel 3 entlanggeführt sein. Als Werkstoff mit Kapillarwirkung eignet sich auch ein Weichschaumstoff, ein Gewebe oder dgl. mit Dochtwirkung.

Der Körper 11 gibt kontinuierlich Schmieröl 8, welches von der Öltasche 10 aus angesaugt wird, an das Ritzel 3 ab. Das Schmieröl 8 fließt anschließend wieder zur Öltasche 10 zurück. Es kann auch zweckmäßig sein, den Körper 11 als zylinderförmiges Gebilde um das Ritzel 3 und/oder die Zahnstange zu führen und teilweise in Anlage mit der Zahnstange 4 zu deren Schmierung auszuführen.

Alternativ oder zusammen mit der dargestellten Ausführungsform eines Mittels 7 zur Förderung von Schmieröl 8 kann es zweckmäßig sein, eine Ölpumpe 12 zur Schmierung der Zahnstangenlenkung 1 vorzusehen. Dies bietet sich insbesondere an, wenn beispielsweise die axialen Bereiche der Zahnstange 4 oder Lager, wie etwa das erste Ritzellager 24 an der Zahnstangenlenkung 1 mit Schmieröl zu versorgen sind.
In dem gezeigten Ausführungsbeispiel ist die Ölpumpe 12 aus Bauteilen der Zahnstangenlenkung 1 selbst gebildet. Die Ölpumpe 12 ist als Kolbenpumpe mit dem Druckstück 14 als Kolben und der Bohrung 28 in dem Lenkgehäuse 2 als Zylinder gebildet. Ein Ansaugkanal 16 für Schmieröl 8 ist dabei in dem Lenkgehäuse 2 von einer Mündung an der Öltasche 10 zu einer Mündung 34 in die Bohrung 28 und, in axialer Richtung der Bohrung 28 betrachtet, zwischen den Deckel 32 und den Druckstückboden 31 geführt. Der Ansaugkanal 16 weist ein Kugel-Rückschlagventil 18 auf, das bei einem Hub des Druckstücks ein Ansaugen in den Förderraum zwischen Deckel 32 und Druckstückboden, jedoch kein Rückfließen des Schmieröls 8 in die Öltasche 10 ermöglicht.

Ein Kanal 17 ist in gleicher Weise in dem Lenkgehäuse 2 von einer diametral der Mündung 34 gelegenen Mündung 36 von dem Förderraum zu Ölabgabepunkten 21 und 22 im Bereich des Ritzels 3 in der Nähe des ersten Lagers 24 geführt. Der Kanal 17 weist ein Rückschlagventil 19 auf, das den Schmierölfluß von der Ölpumpe zu den Ölabgabepunkten 21,22 jedoch nicht umgekehrt erlaubt.

Im Betrieb der Zahnstangenlenkung 1 macht das Druckstück 14 beim Einleiten eines Drehmomentes in das Ritzel 3 durch Zahnstangenkräfte einen Hub entgegen der Druckkraft der Druckfeder 29 und umgekehrt. Bei Kräften, die von der Fahrbahn über die Spurstangen auf die Zahnstange 4 eingeleitet werden, treten an der Verzahnung des Ritzels und der Zahnstange dieselben Verhältnisse auf, sodaß das Druckstück in der Lage ist permanent Schmieröl zu fördern.

Das Druckstück 14 ist durch einen in einer Umfangsnut 38 eingesetzten O-Ring 39 gegen die Bohrung 28 abgedichtet. Der Deckel 32 ist mit einem O-Ring 40 nach außen abgedichtet.

Ist die Zahnstangenlenkung 1 als elektrische Servolenkung oder Hilfskraftlenkung ausgebildet, so ist das Ritzel 3 über ein Untersetzungsgetriebe, das in dem Ausführungsbeispiel nicht gezeigt ist, angetrieben. Das Untersetzungsgetriebe bildet bevorzugt mit dem Getriebe mit Schiebebewegung eine räumliche Einheit, wobei dessen Verzahnungen und Lager in der vorbezeichneten Weise mit Schmieröl versorgbar sind.
Um bei einem etwaigen Leckschlagen der Zahnstangenlenkung 1 ein Auslaufen des Schmieröls 8 zu verhindern ist es zweckmäßig, in dem Schmierölspeicher 6 einen Körper aus einem saugfähigen Material zur Speicherung des Schmieröls 8 anzuordnen.

Der Körper zur Speicherung des Schmieröls 8 kann aus demselben oder einem anderen Material wie der Körper 11 zur Förderung von Schmieröl 8 gebildet sein.
An den Ölabgabepunkten 21 und 22 sind Mittel 20 zur Verteilung des Schmieröls 8, wie etwa Stücke aus filzartigem oder schaumstofFartigem Material angeordnet, die für einen flächigen Schmierölauftrag an dem Verzahnungseingriff 9 sorgen. Die Zahnstange 4 durchgreift in ihrem axialen Bereich Ölabstreifringe, die dafür sorgen, dass Schmieröl nicht in die axial an dem Lenkgehäuse 2 angeordneten Faltenbälge gelangt. Gelangt dennoch Schmieröl in die Faltenbälge, so wird dieses von den Faltenbälgen bei einem Hub der Zahnstange auf Endanschlag in das Lenkgehäuse über eine Ölrückführbohrung zurückgefördert.

### BEZUGSZEICHENLISTE 021f

| | | | |
|---|---|---|---|
| 1 | Zahnstangenlenkung | 26 | Ritzellager, zweites |
| 2 | Lenkgehäuse | 27 | Längsachse an 3 |
| 3 | Ritzel | 28 | Bohrung, zylinderförmig |
| 4 | Zahnstange | 29 | Druckfeder |
| 5 | Verzahnung an 4 | 30 | Gleitfläche |
| 6 | Schmierölspeicher | 31 | Druckstückboden |
| 7 | Mittel zur Förderung v. Schmieröl | 32 | Deckel |
| 8 | Schmieröl | 33 | Filzstreifen, Filzring |
| 9 | Verzahnungseingriff | 34 | Mündung von 16 |
| 10 | Öltasche | 35 | |
| 11 | Körper | 36 | Mündung von 17 |
| 12 | Ölpumpe | 37 | |
| 13 | Kolben v. 12 | 38 | Umfangsnut an 14 |
| 14 | Druckstück | 39 | O-Ring in 14 |
| 15 | Anpresseinrichtung | 40 | O-Ring an 32 |
| 16 | Kanal | 41 | |
| 17 | Kanal | 42 | |
| 18 | Rückschlagventil | 43 | |
| 19 | Rückschlagventil | 44 | |
| 20 | Mittel zur Verteilung von Schmieröl | 45 | |
| 21 | Ölabgabepunkt | 46 | |
| 22 | Ölabgabepunkt | 47 | |
| 23 | Längsachse von 2 | 48 | |
| 24 | Ritzellager, erstes | 49 | |
| 25 | Lenksäuleneingang | 50 | |
| | | | |
| | | | |
| | | | |
| | | | |
| | | | |

## Patentansprüche

1. Zahnstangenlenkung, insbesondere für ein Kraftfahrzeug, mit einem Lenkgehäuse (2) und einem Ritzel (3) das in das Lenkgehäuse (2) eingesetzt ist, und mit einer Zahnstange (4), die mit ihrer Verzahnung (5) mit dem Ritzel (3) in Eingriff ist und in Abhängigkeit von einer Drehung des Ritzels (3) in dem Lenkgehäuse (2) axial verschieblich gelagert ist und mit einem Schmierölspeicher (6) und Mittel (7) zur Förderung von Schmieröl (8) aus dem Schmierölspeicher (6) an den Verzahnungseingriff (9) zwischen der Zahnstange (4) und dem Ritzel (3), **dadurch gekennzeichnet, dass** der Schmierölspeicher (6) und die Mittel (7) zur Förderung von Schmieröl (8) im Bereich der Verzahnung der Zahnstange (4) angeordnet sind und dass Schmierölspeicher (6) und die Mittel (7) zur Förderung von Schmieröl (8) Körper (11) aus einem Werkstoff mit Kapillarwirkung, wie etwa aus Filz, einem Weichschaumstoff oder einem Gewebe umfassen.

2. Zahnstangenlenkung nach Anspruch 1, **dadurch gekennzeichnet, dass** der Körper zur Speicherung des Schmieröls (8) aus einem anderen Werkstoff als der Körper (11) zur Förderung von Schmieröl (8) gebildet ist.

3. Zahnstangenlenkung, insbesondere für ein Kraftfahrzeug, mit einem Lenkgehäuse (2) und einem Ritzel (3) das in das Lenkgehäuse (2) eingesetzt ist, und mit einer Zahnstange (4), die mit ihrer Verzahnung (5) mit dem Ritzel (3) in Eingriff ist und in Abhängigkeit von einer Drehung des Ritzels (3) in dem Lenkgehäuse (2) axial verschieblich gelagert ist und mit einem Schmierölspeicher (6) und Mittel (7) zur Förderung von Schmieröl (8) aus dem Schmierölspeicher (6) an den Verzahnungseingriff (9) zwischen der Zahnstange (4) und dem Ritzel (3), **dadurch gekennzeichnet, dass** die Mittel (7) zur Förderung von Schmieröl (8) eine Ölpumpe (12) umfassen, wobei ein Kolben (13) der Ölpumpe (12) ein Druckstück (14) einer Anpresseinrichtung (15) zur Anpressung der Zahnstange (4) an das Ritzel (3) ist.

4. Zahnstangenlenkung nach Anspruch 3, **dadurch gekennzeichnet, dass** die Mittel (7) zur Förderung von Schmieröl (8) Kanäle (16,17) mit Rückschlagventilen (18,19) in dem Lenkgehäuse (2) umfassen.

5. Zahnstangenlenkung nach einem der Ansprüche 3 oder 4, **dadurch gekennzeichnet, dass** die Zahnstangenlenkung (1) Mittel (20) zur Verteilung von Schmieröl (8) an Ölabgabepunkten (21,22) aufweist.

6. Zahnstangenlenkung nach Anspruch 5, **dadurch gekennzeichnet, dass** die Mittel (20) zur Verteilung von Schmieröl (8) Körper oder Ringe aus filzartigem Material sind.

7. Zahnstangenlenkung nach einem der Ansprüche 1 bis 6, **dadurch gekennzeichnet, dass** das Ritzel (3) mit einem Getriebe eines Elektromotors verbunden ist.

8. Zahnstangenlenkung nach Anspruch 7, **dadurch gekennzeichnet, dass** das Lenkgehäuse (2) und das Getriebe des Elektromotors eine Einheit bilden.

9. Zahnstangenlenkung nach einem der Ansprüche 7 oder 8, **dadurch gekennzeichnet, dass** das Getriebe des Elektromotors durch die Mittel (7) zur Förderung von Schmieröl (8) mit Schmieröl (8) versorgt ist.

10. Zahnstangenlenkung nach Anspruch 9, **dadurch gekennzeichnet, dass** die Mittel (7) zur Förderung von Schmieröl (8) Mittel zur Schmierung der Lager der Zahnstangenlenkung (1) und der Lager des Getriebes des Elektromotors aufweisen.

11. Zahnstangenlenkung nach einem der Ansprüche 1 bis 10, **dadurch gekennzeichnet, dass** die Zahnstange (4) Ölabstreifringe zur Rückführung von anhaftendem Schmieröl (8) in den Schmierölspeicher (6) durchgreift.

12. Zahnstangenlenkung nach einem der Ansprüche 1 bis 11, **dadurch gekennzeichnet, dass** das Lenkgehäuse (2) eine Ölrückführbohrung aufweist, die einen Innenraum eines an einem axialen Ende des Lenkgehäuses (2) angeordneten Faltenbalgs und den Schmierölspeicher (6) verbindet, wobei beim Stauchen des Faltenbalgs Schmieröl (8) zu dem Schmierölspeicher (6) gefördert ist.

## Claims

1. Rack-and-pinion steering system, in particular for a motor vehicle, having a steering housing (2) and a pinion (3) which is inserted into the steering housing (2), and having a rack (4) whose toothing (5) engages with the pinion (3) and which rack (4) is mounted so as to be axially displaceable in the steering housing (2) as a function of a revolution of the pinion (3), and having a lubricating-oil reservoir (6) and means (7) for conveying lubricating oil (8) from the lubricating-oil reservoir (6) to the toothing engagement location (9) between the rack (4) and the pinion (3), **characterized in that** the lubricating-oil reservoir (6) and the means (7) for conveying lubricating oil (8) are arranged in the region of the toothing of the rack (4), and **in that** the lubricating-oil reservoir (6) and the means (7) for conveying lubricating oil (8) comprise bodies (11) made from a material having a capillary action, for instance made from felt, a soft foam or a woven fabric.

2. Rack-and-pinion steering system according to Claim 1, **characterized in that** the body for storing the lubricating oil (8) is formed from a different material than the body (11) for conveying lubricating oil (8).

3. Rack-and-pinion steering system, in particular for a motor vehicle, having a steering housing (2) and a pinion (3) which is inserted into the steering housing (2), and having a rack (4) whose toothing (5) engages with the pinion (3) and which rack (4) is mounted so as to be axially displaceable in the steering housing (2) as a function of a revolution of the pinion (3), and having a lubricating-oil reservoir (6) and means (7) for conveying lubricating oil (8) from the lubricating-oil reservoir (6) to the toothing engagement location (9) between the rack (4) and the pinion (3), **characterized in that** the means (7) for conveying lubricating oil (8) comprise an oil pump (12), a piston (13) of the oil pump (12) being a pressure piece (14) of a pressure-exerting device (15) for pressing the rack (4) onto the pinion (3).

4. Rack-and-pinion steering system according to Claim 3, **characterized in that** the means (7) for conveying lubricating oil (8) comprise ducts (16, 17) having nonreturn valves (18, 19) in the steering housing (2).

5. Rack-and-pinion steering system according to either of Claims 3 and 4, **characterized in that** the rack-and-pinion steering system (1) has means (20) for distributing lubricating oil (8) to oil dispensing points (21, 22).

6. Rack-and-pinion steering system according to Claim 5, **characterized in that** the means (20) for distributing lubricating oil (8) are bodies or rings made from feltlike material.

7. Rack-and-pinion steering system according to one of Claims 1 to 6, **characterized in that** the pinion (3) is connected to a gear mechanism of an electric motor.

8. Rack-and-pinion steering system according to Claim 7, **characterized in that** the steering housing (2) and the gear mechanism of the electric motor form one unit.

9. Rack-and-pinion steering system according to either of Claims 7 and 8, **characterized in that** the gear mechanism of the electric motor is supplied with lubricating oil (8) by the means (7) for conveying lubricating oil (8).

10. Rack-and-pinion steering system according to Claim 9, **characterized in that** the means (7) for conveying lubricating oil (8) have means for lubricating the bearings of the rack-and-pinion steering system (1) and the bearings of the gear mechanism of the electric motor.

11. Rack-and-pinion steering system according to one of Claims 1 to 10, **characterized in that** the rack (4) passes through oil-stripping rings for returning adhering lubricating oil (8) into the lubricating-oil reservoir (6).

12. Rack-and-pinion steering system according to one of Claims 1 to 11, **characterized in that** the steering housing (2) has an oil return bore which connects an interior space of a folding bellows arranged at one axial end of the steering housing (2) and the lubricating-oil reservoir (6), lubricating oil (8) being conveyed to the lubricating-oil reservoir (6) when the folding bellows is compressed.

## Revendications

1. Direction à crémaillère, notamment pour véhicule automobile, avec un carter de direction (2) et un pignon (3) placé dans le carter de direction (2) et avec une crémaillère (4) dont la denture (5) est en prise avec le pignon (3) et qui est monté mobile en translation axiale dans le carter de direction (2) en fonction d'une rotation du pignon (3), et avec un réservoir (6) d'huile de graissage et des moyens (7) destinés à acheminer l'huile de graissage (8) du réservoir (6) d'huile de graissage jusqu'à l'endroit de prise (9) entre la denture de la crémaillère (4) et le pignon (3), **caractérisée en ce que** le réservoir (6) d'huile de graissage et les moyens (7) destinés à acheminer l'huile de graissage (8) sont disposés à la hauteur de la denture de la crémaillère (4) et que le réservoir (6) d'huile de graissage et les moyens (7) destinés à acheminer l'huile de graissage (8) comprennent des corps (11) réalisés en un matériau agissant par capillarité, par exemple en feutre, en mousse souple ou en un tissu.

2. Direction à crémaillère selon la revendication 1, **caractérisée en ce que** le corps destiné à stocker l'huile de graissage (8) est réalisé en un matériau différent de celui du corps (11) destiné à acheminer l'huile de graissage (8).

3. Direction à crémaillère, notamment pour véhicule automobile, avec un carter de direction (2) et un pignon (3) placé dans le carter de direction (2) et avec une crémaillère (4) dont la denture (5) est en prise avec le pignon (3) et qui est monté mobile en translation axiale dans le carter de direction (2) en fonction d'une rotation du pignon (3), et avec un réservoir (6) d'huile de graissage et des moyens (7) destinés à acheminer l'huile de graissage (8) du réservoir (6) d'huile de graissage jusqu'à l'endroit de prise (9) entre la denture de la crémaillère (4) et le pignon (3), **caractérisée en ce que** les moyens (7) destinés à acheminer l'huile de graissage (8) comprennent une pompe à huile (12), un piston (13) de la pompe à huile (12) étant un élément presseur (14) d'un organe presseur (15) destiné à plaquer la crémaillère (4) contre le pignon (3).

4. Direction à crémaillère selon la revendication 3, **caractérisée en ce que** les moyens (7) destinés à acheminer l'huile de graissage (8) comprennent des canaux (16, 17) avec des soupapes anti-retour (18, 19) prévus dans le carter de direction (2).

5. Direction à crémaillère selon l'une quelconque des revendications 3 ou 4, **caractérisée en ce que** la direction à crémaillère (1) comporte des moyens (20) de distribution de l'huile de graissage (8) à des points d'alimentation en huile (21, 22).

6. Direction à crémaillère selon la revendication 5, **caractérisée en ce que** les moyens (20) de distribution de l'huile de graissage (8) sont des corps ou des anneaux en matériau du type feutre.

7. Direction à crémaillère selon l'une quelconque des revendications 1 à 6, **caractérisée en ce que** le pignon (3) est relié à une transmission d'un moteur électrique.

8. Direction à crémaillère selon la revendication 7, **caractérisée en ce que** le carter de direction (2) et la transmission du moteur électrique forment une unité.

9. Direction à crémaillère selon l'une quelconque des revendications 7 ou 8, **caractérisée en ce que** la transmission du moteur électrique est alimentée en huile de graissage (8) par les moyens (7) destinés à acheminer l'huile de graissage (8).

10. Direction à crémaillère selon la revendication 9, **caractérisée en ce que** les moyens (7) destinés à acheminer l'huile de graissage (8) comportent des moyens destinés à lubrifier les paliers de la direction à crémaillère (1) et les paliers de la transmission du moteur électrique.

11. Direction à crémaillère selon l'une quelconque des revendications 1 à 10, **caractérisée en ce que** la crémaillère (4) traverse des bagues racleuses destinées à recirculer l'huile de graissage (8) y adhérant dans le réservoir (6) d'huile de graissage.

12. Direction à crémaillère selon l'une quelconque des revendications 1 à 11, **caractérisée en ce que** le carter de direction (2) comporte un trou de recirculation d'huile reliant un volume interne d'un soufflet à plis disposé à une extrémité axiale du carter de direction (2) et le réservoir (6) d'huile de graissage, l'huile de graissage (8) étant acheminée vers le réservoir (6) d'huile de graissage lors de la compression du soufflet à plis.
